# FASCICULE DE BREVET EUROPEEN

(11) **EP 1 750 981 B1**
(45) Date de publication et mention de la délivrance du brevet: **05.11.2008**
(21) Numéro de dépôt: 05747078.3
(22) Date de dépôt: 28.04.2005
(51) Int. Cl.: B60R 22/22

(54) **DISPOSITIF DE FIXATION DE BOUCLES DE VERROUILLAGE DE CEINTURES**
BEFESTIGUNGSVORRICHTUNG FÜR KRAFTFAHRZEUGSICHERHEITSGURTVERSCHLUSSSCHNALLE UND DAMIT VERSEHENER SITZ
MOTOR VEHICLE SAFETY BELT FASTENING BUCKLE ATTACHMENT DEVICE AND SEAT PROVIDED THEREWITH

(30) Priorité: 06.05.2004 FR 0450869
(43) Date de publication de la demande: 14.02.2007
(73) Titulaire: Renault SAS, 92100 Boulogne Billancourt (FR)
(72) Inventeur: GERMAIN, Stéphane, F-78720 CERNAY LA VILLE (FR); SOUVILLE, Philippe, F-78180 MONTIGNY LE BRETONNEUX (FR)
(86) Numéro de dépôt international: PCT/FR2005/050286
(87) Numéro de publication internationale: WO 2005/110822

(56) Documents cités:
- EP-A- 1 122 135
- DE-A- 2 931 552
- FR-A- 2 726 521
- FR-A- 2 774 959

## Description

L'invention concerne un dispositif de fixation de boucles de verrouillage de ceintures de sécurité à l'arrière d'un véhicule automobile, dans lequel deux boucles de ceintures sont agencées entre deux zones d'assise à l'intérieur d'un boîtier de maintien et sont reliées à un renfort solidaire du plancher du véhicule.

A l'arrière d'un véhicule, il est nécessaire que les fixations de boucles de verrouillage de ceintures soient de faible encombrement. De plus, il faut qu'elles soient compatibles avec les différentes configurations de la banquette arrière. En outre, il faut que les conditions de sécurité soient optimisées pour chaque passager arrière, quelle que soit sa place.

On connaît par la publication FR-A-2726521 un dispositif de fixation de boucles de verrouillage de ceinture de sécurité à l'arrière d'un véhicule automobile dans lequel un boîtier comporte deux logements destinés à recevoir les boucles de verrouillage de ceinture, lesdites boucles étant reliées à un renfort de plancher par des sangles. Il est prévu des moyens de maintien des boucles à l'intérieur du boîtier. Pour des raisons de confort des passagers, le boîtier est lui rattaché de manière élastique au renfort de plancher.

Cependant ce dispositif présente des inconvénients. Tout d'abord, le boîtier étant disposé transversalement de façon que chaque boucle de verrouillage soit à proximité de sa zone d'assise respective, le dispositif est encombrant. En effet, les boucles empiètent sur les zones d'assises et risquent, en particulier, d'être inconfortables pour les passagers. De plus, ce type de dispositif de fixation de boucles de verrouillage de ceintures n'est pas très adapté à une banquette coulissant longitudinalement et/ou transformable transversalement, plus particulièrement de trois à deux places.

Afin de pallier ces inconvénients, l'invention a pour objet un dispositif de fixation de boucles de verrouillage de ceintures de sécurité peu encombrant.

L'invention a aussi pour objet un dispositif de fixation de boucles de verrouillage de ceintures de sécurité dans lequel les conditions de sécurité sont optimisées pour chaque passager.

L'invention a aussi pour objet un agencement de dispositifs de fixation de ceintures de sécurité adapté à une banquette coulissante longitudinalement et/ou transformable transversalement.

A cet effet, l'invention propose un dispositif de fixation de boucles de ceintures de sécurité du type cité ci-dessus, caractérisé en ce que le boîtier comporte deux logements, destinés à recevoir les boucles et disposés longitudinalement, la boucle de ceinture avant étant fixe par rapport au boîtier et la boucle arrière étant apte à se déplacer à l'intérieur du boîtier.

Selon d'autres caractéristiques de l'invention:
- La boucle arrière est apte à se déplacer selon une direction sensiblement verticale à l'intérieur du boîtier.
- La boucle arrière est apte à se déplacer selon une direction sensiblement transversale à l'intérieur du boîtier.
- La boucle avant est reliée par l'intermédiaire d'une douille à un axe transversal solidaire du renfort.
- La douille est montée coulissante sur l'axe transversal.
- La douille est montée pivotante autour de l'axe transversal.
- Le boîtier comporte des moyens de retenue de la boucle avant à l'intérieur de son logement.
- Un anneau de la boucle arrière est relié par une sangle au renfort.
- Une paroi latérale du logement arrière du boîtier de maintien jouxtant la partie centrale de l'assise comporte une échancrure.
- Le boîtier est monté mobile longitudinalement par rapport au plancher.

A cet effet, l'invention propose aussi une banquette transformable transversalement comportant au moins deux dispositifs de fixation de boucles de verrouillage de ceintures, caractérisé en ce que les deux boucles avant sont montées solidaires l'une de l'autre.

Selon une autre caractéristique de la banquette, les boucles avant sont reliées par un axe transversal commun solidaire du plancher du véhicule.

D'autres caractéristiques et avantages de l'invention apparaîtront à la lecture de la description d'exemples de réalisation d'un dispositif de fixation de boucles de verrouillage de ceinture et d'une banquette en référence aux dessins annexés dans lesquels :
- La figure 1 est une vue schématique de dessus d'une assise de banquette arrière comportant des dispositifs de fixation de boucles de verrouillage selon l'invention.
- La figure 2 est une vue schématique de face d'un dispositif de fixation de boucles de verrouillage de ceintures selon l'invention.
- La figure 3 est une vue schématique latérale du dispositif selon la direction III-III de la figure 2.
- La figure 4 est une vue schématique latérale du dispositif selon la direction IV-IV de la figure 2.

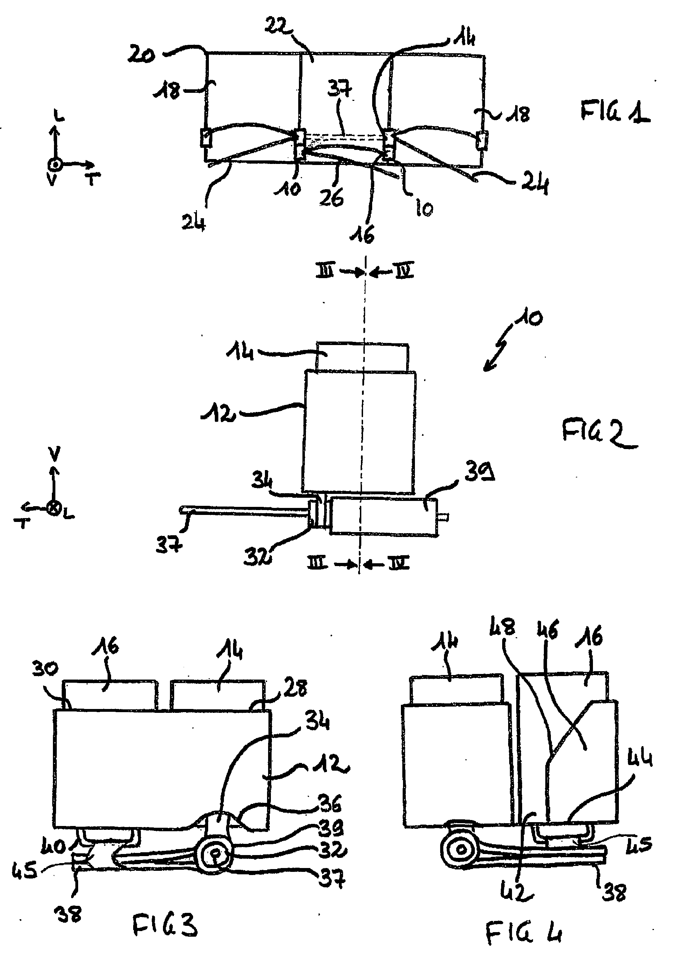

Dans la description qui suit, nous prendrons à titre non limitatif une orientation longitudinale, verticale et transversale indiquée par le trièdre L,V,T de la figure 1 ainsi qu'une orientation d'avant en arrière correspondant au sens de marche du véhicule.

Des éléments identiques ou analogues sont désignés par les mêmes chiffres de référence.

Tel que représenté à la figure 1, deux dispositifs 10 de fixation de boucles de verrouillage de ceintures de sécurité, comportant un boîtier de maintien 12 dans lequel deux boucles de verrouillage 14,16 sont disposées longitudinalement, sont chacun agencés entre une zone latérales 18 et une zone centrale 22 d'une assise 20 d'une banquette arrière d'un véhicule (non représenté). Cette configuration permet de limiter l'encombrement du dispositif 10. En effet, le dispositif n'empiète alors pas sur les zones d'assise 18,22 et ne risque pas de gêner le confort des passagers.

Dans l'exemple décrit ici, la boucle avant 14 de chaque dispositif est destinée à recevoir un pêne (non représenté) d'une ceinture de sécurité 24 agencée aux places latérales 18 tandis que les boucles arrière 16 sont destinées à recevoir des pênes (non représentés) d'une ceinture 26 agencée à la place centrale 22.

Les dispositifs de fixation de boucles de verrouillage de ceintures n'étant pas localisés au même endroit selon la direction longitudinale, le brin ventral de la ceinture ne sera pas agencé de la même façon pour les passagers des places latérales 18 que pour le passager de la place centrale 22. Il est donc nécessaire de prévoir un dispositif permettant que les conditions de sécurité du passager de la place centrale 22 se rapprochent le plus possible de celles des passagers des places latérales 18.

Ainsi, tel que représenté aux figures 2 et 3, le boîtier 12 comporte deux logements disposés longitudinalement. Un logement avant 28 est destiné à recevoir la boucle avant 14 et un logement arrière 30 est destiné à recevoir la boucle arrière 16.

Une douille transversale 32 est rattachée à la boucle avant 14 par l'intermédiaire d'un support 34.

Une encoche 36 peut être prévue dans les parois latérales du boîtier de façon à pouvoir accueillir la douille 32.

La boucle avant 14 est reliée de manière rigide au plancher par l'intermédiaire, par exemple, d'un axe transversal 37 coopérant avec la douille 32.

Une extrémité de l'axe transversal 37 est reliée à un élément de réception tubulaire 39, lui-même solidaire d'un renfort 38 fixé sur le plancher du véhicule.

La douille 32 est montée coulissante entre une position dans laquelle la douille 32 est en butée à l'intérieur de l'élément de réception 39 et une position dans laquelle elle est verrouillée en un point de l'axe situé en dehors de l'élément de réception 39.

Avantageusement, la douille 32 est aussi montée à rotation autour de l'axe transversal 37, de façon que la boucle avant 14 puisse pivoter et ainsi faciliter l'inclinaison d'un dossier (non représenté) de la banquette ou bien de façon à pouvoir escamoter le dispositif de fixation.

On peut prévoir des éléments de retenue (non représentés) de la boucle avant 14 à l'intérieur du logement avant 28, tel que des ergots par exemple.

Tel que représenté à la figure 4, une partie inférieure 40 de la boucle de verrouillage arrière 16 comporte un anneau 42 passant à travers un trou (non représenté) ménagé dans une paroi de fond 44 du boîtier 12. Une sangle 45 relie l'anneau 42 de la boucle arrière 16 et le renfort 38.

La boucle arrière 16 est maintenue longitudinalement et en partie transversalement à l'intérieur du boîtier de maintien 12 mais peut se déplacer verticalement à l'intérieur du logement arrière 30. De plus, une paroi latérale 46 du logement arrière 30, jouxtant la place centrale 22, comporte une échancrure 48.

Ainsi l'échancrure 48 permet au logement arrière 30 d'exercer un pincement sur la boucle arrière 16, de façon que la boucle arrière 16 soit maintenue et puisse quand même se déplacer verticalement à l'intérieur du boîtier 12. D'autre part, la sangle 45 de la boucle arrière 16 peut passer à travers l'échancrure 48 en direction de la place centrale 22. Le déplacement possible de la boucle arrière 16 à l'intérieur du boîtier de maintien 12 permet ainsi de modifier l'angle entre le brin ventral de la ceinture centrale 26 et le point de fixation de la ceinture de façon que la configuration du brin ventral de la ceinture centrale 26 soit sensiblement semblable à celle du brin ventral des ceintures latérales 24 afin que les conditions de sécurité du passager central soient les meilleures possibles.

De même, dans le cas où, tel que représenté à la figure 1, l'assise 20, comportant deux dispositifs 10 de fixation de boucles de verrouillage de ceinture, est une banquette transformable transversalement, c'est-à-dire pouvant passer de trois à deux places par un coulissement transversal des zones d'assise 18, la solidarisation des deux dispositifs 10 de fixation de boucles de verrouillage permet aussi de faciliter la manipulation de l'assise 20. Par exemple, il est avantageux de monter les deux boucles 14 avant sur un axe transversal 37 unique. Si les boîtiers de maintien 10 sont rattachés aux portions d'assises 18, le coulissement transversal des portions d'assise 18 entraîne alors également le déplacement des dispositifs de fixation 10 par le biais du coulissement des douilles 32 le long de l'axe transversal 37.

On peut aussi prévoir que l'axe transversal 37 comporte des crochets de verrouillage (non représentés) du siège dans le plancher du véhicule.

Dans une variante de l'invention, non représentée, le renfort 38 est solidarisé au plancher par l'intermédiaire d'un rail longitudinal permettant ainsi le coulissement longitudinal du dispositif 10. Cet aspect de l'invention est particulièrement avantageux dans le cas où l'assise 20 est coulissante longitudinalement. De cette manière, si le boîtier de maintien 12 est, par exemple, solidaire de l'assise 20, il sera facile de changer la configuration de l'assise 20 en une seule opération sans avoir à manipuler le dispositif de fixation 10 de boucles de ceinture.

## Revendications

1. Dispositif (10) de fixation de boucles de verrouillage de ceintures de sécurité à l'arrière d'un véhicule automobile, dans lequel deux boucles de ceintures (14,16) sont agencées entre deux zones (18,22) d'une assise (20) à l'intérieur d'un boîtier de maintien (12) et sont reliées à un renfort (38) solidaire du plancher du véhicule, **caractérisé en ce que** le boîtier (12) comporte deux logements (28,30), destinés à recevoir les boucles (14,16) et disposés longitudinalement, la boucle de ceinture avant (14) étant fixe par rapport au boîtier (12) et la boucle arrière (14) étant apte à se déplacer à l'intérieur du boîtier (12).

2. Dispositif (10) de fixation de boucles de verrouillage de ceintures selon la revendication précédente, **caractérisé en ce que** la boucle arrière (16) est apte à se déplacer selon une direction sensiblement verticale à l'intérieur du boîtier (12).

3. Dispositif (10) de fixation de boucles de verrouillage de ceintures selon l'une quelconque des revendications précédentes, **caractérisé en ce que** la boucle arrière (16) est apte à se déplacer selon une direction sensiblement transversale à l'intérieur du boîtier (12).

4. Dispositif (10) de fixation de boucles de verrouillage de ceintures selon l'une quelconque des revendications précédentes, **caractérisé en ce que** la boucle avant (14) est reliée par l'intermédiaire d'une douille (32) à un axe transversal (37) solidaire du renfort (38).

5. Dispositif (10) de fixation de boucles de verrouillage de ceintures selon la revendication 4, **caractérisé en ce que** la douille (32) est montée coulissante sur l'axe transversal (37).

6. Dispositif (10) de fixation de boucles de verrouillage de ceintures selon la revendication 4, **caractérisé en ce que** la douille (32) est montée pivotante autour de l'axe transversal (37).

7. Dispositif (10) de fixation de boucles de verrouillage de ceintures selon l'une quelconque des revendications précédentes, **caractérisé en ce que** le boîtier (12) comporte des moyens de retenue de la boucle avant (14) à l'intérieur de son logement (28).

8. Dispositif (10) de fixation de boucles de verrouillage de ceintures selon l'une quelconque des revendications précédentes, **caractérisé en ce qu'**un anneau (42) de la boucle arrière (16) est relié par une sangle (45) au renfort (38).

9. Dispositif (10) de fixation de boucles de verrouillage de ceinture selon l'une quelconque des revendications précédentes, **caractérisé en ce qu'**une paroi latérale (46) du logement arrière (30) du boîtier de maintien (12) jouxtant la partie centrale (22) de l'assise (20) comporte une échancrure (48).

10. Dispositif (10) de fixation de boucles de verrouillage de ceintures selon l'une quelconque des revendications précédentes, **caractérisé en ce que** le boîtier (12) est monté mobile longitudinalement par rapport au plancher.

11. Banquette transformable transversalement comportant au moins deux dispositifs (10) de fixation de boucles de verrouillage de ceintures selon l'une quelconque des revendications précédentes, **caractérisé en ce que** les deux boucles avant (14) sont montées solidaires l'une de l'autre.

12. Banquette selon la revendication précédente, **caractérisé en ce que** les boucles avant (14) sont reliées par un axe transversal (37) commun solidaire du plancher du véhicule.

## Claims

1. Device (10) for attaching safety belt fastening buckles in the rear of a motor vehicle, in which two belt buckles (14, 16) are positioned between two areas (18, 22) of a seat (20) inside a holding case (12) and are connected to a reinforcement (38) secured to the floor of the vehicle, **characterized in that** the case (12) has two housings (28, 30) intended to receive the buckles (14, 16) and arranged longitudinally, the front belt buckle (14) being fixed with respect to the case (12) and the rear buckle (16) being able to move inside the case (12).

2. Device (10) for attaching belt fastening buckles according to the preceding claim, **characterized in that** the rear buckle (16) is able to move essentially vertically inside the case (12).

3. Device (10) for attaching belt fastening buckles according to either of the preceding claims, **characterized in that** the rear buckle (16) is able to move essentially transversely inside the case (12).

4. Device (10) for attaching belt fastening buckles according to any one of the preceding claims, **characterized in that** the front buckle (14) is connected via a ring (32) to a transverse rod (37) secured to the reinforcement (38).

5. Device (10) for attaching belt fastening buckles according to Claim 4, **characterized in that** the ring (32) is mounted such that it slides on the transverse rod (37).

6. Device (10) for attaching belt fastening buckles according to Claim 4, **characterized in that** the ring (32) is mounted such that it pivots about the transverse rod (37).

7. Device (10) for attaching belt fastening buckles according to any one of the preceding claims, **characterized in that** the case (12) has means for retaining the front buckle (14) inside its housing (28).

8. Device (10) for attaching belt fastening buckles according to any one of the preceding claims, **characterized in that** a grommet (42) of the rear buckle (16) is connected to the reinforcement (38) by a strap (45).

9. Device (10) for attaching belt fastening buckles according to any one of the preceding claims, **characterized in that** a side wall (46) of the rear housing (30) of the holding case (12) adjoining the central part (22) of the seat (20) has a cut-off (48).

10. Device (10) for attaching belt fastening buckles according to any of the preceding claims, **characterized in that** the case (12) is mounted such that it can move longitudinally with respect to the floor.

11. Transversely convertible bench seat having at least two devices (10) for attaching belt fastening buckles according to any one of the preceding claims, **characterized in that** the two front buckles (14) are secured to one another.

12. Bench seat according to the preceding claim, **characterized in that** the front buckles (14) are connected by a common transverse rod (37) secured to the floor of the vehicle.

## Patentansprüche

1. Vorrichtung (10) zur Befestigung von Sicherheitsgurtverschlussschnallen am hinteren Teil eines Kraftfahrzeugs, wobei zwei Gurtschnallen (14, 16) zwischen zwei Bereichen (18, 22) eines Sitzes (20) in einem Stützgehäuse (12) angeordnet und mit einer am Fahrzeugboden fest angebrachten Verstärkung (38) verbunden sind, **dadurch gekennzeichnet, dass** das Gehäuse (12) zwei Aufnahmen (28, 30) aufweist, die die Schnallen (14, 16) aufnehmen sollen und in Längsrichtung angeordnet sind, wobei die vordere Gurtschnalle (14) bezüglich des Gehäuses (12) feststehend ist und sich die hintere Schnalle (14) im Inneren des Gehäuse (12) bewegen kann.

2. Vorrichtung (10) zur Befestigung von Sicherheitsgurtverschlussschnallen nach dem vorhergehenden Anspruch, **dadurch gekennzeichnet, dass** sich die hintere Schnalle (16) entlang einer im Wesentlichen vertikalen Richtung im Inneren des Gehäuses (12) bewegen kann.

3. Vorrichtung (10) zur Befestigung von Sicherheitsgurtverschlussschnallen nach einem der vorhergehenden Ansprüche, **dadurch gekennzeichnet, dass** sich die hintere Schnalle (16) entlang einer im Wesentlichen quer verlaufenden Richtung im Inneren des Gehäuses (12) bewegen kann.

4. Vorrichtung (10) zur Befestigung von Sicherheitsgurtverschlussschnallen nach einem der vorhergehenden Ansprüche, **dadurch gekennzeichnet, dass** die vordere Schnalle (14) mittels einer Hülse (32) mit einer an der Verstärkung (38) befestigten Querachse (37) verbunden ist.

5. Vorrichtung (10) zur Befestigung von Sicherheitsgurtverschlussschnallen nach Anspruch 4, **dadurch gekennzeichnet, dass** die Hülse (32) auf der Querachse (37) verschiebbar angebracht ist.

6. Vorrichtung (10) zur Befestigung von Sicherheitsgurtverschlussschnallen nach Anspruch 4, **dadurch gekennzeichnet, dass** die Hülse (32) um die Querachse (37) schwenkbar angebracht ist.

7. Vorrichtung (10) zur Befestigung von Sicherheitsgurtverschlussschnallen nach einem der vorhergehenden Ansprüche, **dadurch gekennzeichnet, dass** das Gehäuse (12) Mittel zum Festhalten der vorderen Schnalle (14) im Inneren ihrer Aufnahme (28) aufweist.

8. Vorrichtung (10) zur Befestigung von Sicherheitsgurtverschlussschnallen nach einem der vorhergehenden Ansprüche, **dadurch gekennzeichnet, dass** ein Ring (42) der hinteren Schnalle (16) durch ein Band (45) mit der Verstärkung (38) verbunden ist.

9. Vorrichtung (10) zur Befestigung von Sicherheitsgurtverschlussschnallen nach einem der vorhergehenden Ansprüche, **dadurch gekennzeichnet, dass** eine Seitenwand (46) der hinteren Aufnahme (30) des Stützgehäuses (12), die an den mittleren Teil (22) des Sitzes (20) angrenzt, einen Ausschnitt (48) aufweist.

10. Vorrichtung (10) zur Befestigung von Sicherheitsgurtverschlussschnallen nach einem der vorhergehenden Ansprüche, **dadurch gekennzeichnet, dass** das Gehäuse (12) in Längsrichtung bezüglich des Bodens beweglich angebracht ist.

11. In Querrichtung umrüstbare Sitzbank mit mindestens zwei Vorrichtungen (10) zur Befestigung von Sicherheitsgurtverschlussschnallen nach einem der vorhergehenden Ansprüche, **dadurch gekennzeichnet, dass** die beiden vorderen Schnallen (14) fest aneinander angebracht sind.

12. Sitzbank nach dem vorhergehenden Anspruch, **dadurch gekennzeichnet, dass** die vorderen Schnallen (14) durch eine gemeinsame fest am Fahrzeugboden angebrachte Querachse (37) verbunden sind.
